# EUROPÄISCHE PATENTSCHRIFT

(11) **EP 3 998 864 B1**
(45) Veröffentlichungstag und Bekanntmachung des Hinweises auf die Patenterteilung: **13.08.2025**
(21) Anmeldenummer: 20734523.2
(22) Anmeldetag: 23.06.2020
(51) Int. Cl.: A22C 21/00

(54) **VORRICHTUNG UND VERFAHREN ZUM SCHNEIDEN IN MINDESTENS IM BEREICH EINES BRUSTBEINS EINER KARKASSE VON GEFLÜGELKÖRPERN ODER TEILEN DAVON MITEINANDER VERBUNDENEN BRUSTFILETS ENTLANG DES BRUSTBEINS**
APPARATUS AND METHOD FOR CUTTING INTO BREAST FILLETS THAT ARE CONNECTED TO ONE ANOTHER AT LEAST IN THE REGION OF A BREASTBONE OF A POULTRY CARCASS OR PARTS THEREOF, WHEREIN THE BREAST FILLETS ARE CUT ALONG THE BREASTBONE
DISPOSITIF ET PROCÉDÉ DE DÉCOUPE, DANS AU MOINS UNE ZONE DU STERNUM D'UNE CARCASSE DE CORPS DE VOLAILLE OU DE PARTIES DE CELUI-CI, DE FILETS DE POITRINE RELIÉS ENTRE EUX LE LONG DU STERNUM

(30) Priorität: 05.07.2019 DE 102019118268
(43) Veröffentlichungstag der Anmeldung: 25.05.2022
(73) Patentinhaber: Nordischer Maschinenbau Rud. Baader GmbH + Co. KG, 23560 Lübeck (DE)
(72) Erfinder: RIGGERT, Lasse, 23560 Lübeck (DE); FISCHER, Valentin, 23560 Lübeck (DE); LANDT, Andreas, 23560 Lübeck (DE)
(74) Vertreter: Stork Bamberger Patentanwälte PartmbB
(86) Internationale Anmeldenummer: PCT/EP2020/067496
(87) Internationale Veröffentlichungsnummer: WO 2021/004778

(56) Entgegenhaltungen:
- EP-A1- 2 606 735
- EP-B1- 2 606 735
- WO-A1-2017/131519

## Beschreibung

Die Erfindung betrifft eine Vorrichtung, ausgebildet und eingerichtet zum Schneiden in mindestens im Bereich eines Brustbeins einer Karkasse von Geflügelkörpern oder Teilen davon miteinander verbundenen Brustfilets entlang des Brustbeins, umfassend eine Transportvorrichtung mit einem umlaufend antreibbaren Transportförderer zum Transportieren der zu bearbeitenden Geflügelkörper oder Teilen davon Hals voraus entlang eines eine Transportebene E definierenden Transportpfads in Transportrichtung T, mindestens eine am Transportförderer angeordnete Haltevorrichtung zum Aufnehmen und Halten der Geflügelkörper oder Teilen davon während des Transports entlang des Transportpfads in der Transportebene, eine entlang des Transportpfads im Bereich des Transportförderers angeordnete Messeranordnung mit einem Paar Trennmesser zum Schneiden der Brustfilets entlang des Brustbeins, wobei zu beiden Seiten der Mittelachse des Transportpfads jeweils ein Trennmesser angeordnet ist, derart, dass zwischen den beiden Trennmessern ein Spalt A zum Transport der zu bearbeitenden Geflügelkörper oder Teilen davon mit dem Brustbein durch die einander gegenüberliegenden Trennmesser gebildet ist, wobei der Messeranordnung ein Zentriermittel zugeordnet ist, das zum Vorzentrieren des Brustbeins der Karkasse ausgebildet und eingerichtet ist und das zwei Zentrierelemente umfasst, die jeweils aus einer Warteposition, in der die Zentrierelemente außerhalb des Transportpfads positioniert sind, in eine Zentrierposition, in der die Zentrierelemente auf dem Transportpfad positioniert sind, und zurück bewegbar sind, wobei die Zentrierelemente in ihrer Zentrierposition in Transportrichtung T der Geflügelkörper oder Teilen davon mindestens teilweise vor den beiden Trennmessern liegen.

Die Erfindung betrifft weiterhin ein Verfahren zum Schneiden in mindestens im Bereich eines Brustbeins einer Karkasse von Geflügelkörpern oder Teilen davon miteinander verbundenen Brustfilets entlang des Brustbeins, umfassend die Schritte: Transportieren der zu bearbeitenden Geflügelkörper oder Teilen davon Hals voraus entlang eines eine Transportebene E definierenden Transportpfads in Transportrichtung T, wobei die Geflügelkörper oder Teile davon mittels eines umlaufend angetriebenen Transportförderers entlang des Transportpfads zu und durch mindestens eine Messeranordnung transportiert werden, Einfädeln des Brustbeins der Karkasse zwischen ein Paar Trennmesser der Messeranordnung, und Schneiden der Brustfilets zu beiden Seiten des Brustbeins entlang des Brustbeins mittels der Trennmesser, wobei das Brustbein vor dem Eingriff der Trennmesser in die Brustfilets mittels eines Zentriermittels vorzentriert wird, indem Zentrierelemente des Zentriermittels von beiden Seiten des Transportpfads aus einer Warteposition außerhalb des Transportpfads in eine Zentrierposition auf dem Transportpfad bewegt werden, und dass die Zentrierelemente zurück in die Warteposition bewegt werden, sobald sich ein Brustbeinkammfortsatz des Brustbeins der Karkasse zwischen den Trennmessern befindet.

Solche Vorrichtungen und Verfahren kommen in der Geflügel verarbeitenden Industrie zum Einsatz, um zwei einzelne Brustfilets vollautomatisch oder halbautomatisch von der Karkasse bzw. von Karkassenabschnitten (im Folgenden pauschal als Karkasse bezeichnet) eines entweideten Geflügelkörpers oder Teilen davon zu lösen, einzuschneiden oder vollständig von der Karkasse zu trennen. Als einzelnes Brustfilet kann jeweils nur ein Außenfilet verstanden werden. Das Brustfilet kann aber auch jeweils aus Innenfilet und Außenfilet bestehen. Das Schneiden in das Brustfilet umfasst im Sinne der Erfindung entsprechend sowohl das vollständige Lösen bereits teilweise von der Karkasse eines entweideten Geflügelkörpers oder Teilen davon gelöster Brustfilets von der Karkasse, also das Gewinnen von Einzelbrustfilets durch Trennen der zu beiden Seiten des Brustbeins der Karkasse herabhängenden und im Bereich des Brustbeins noch miteinander verbundenen Brustfilets vom Brustbein, als auch das Einschneiden in die Brustfilets entlang des Brustbeins, z.B. für den Fall, dass noch kein Vorschnitt erfolgt ist, die Brustfilets also entsprechend noch vollständig mit der Karkasse verbunden sind. Beide Varianten dienen der Gewinnung von Einzelbrustfilets, im Gegensatz zur Gewinnung von miteinander verbundenen Brustfilets, den so genannten Schmetterlingsfilets.

Die Geflügelkörper oder Teile davon können z.B. Vorderhälften oder insbesondere so genannte Brustkappen sein, also mindestens vom Rückenbereich und Teilen der Rippen befreite Vorderhälften. Die Geflügelkörper oder Teile davon, also z.B. die Brustkappen werden in einer Brustkappenfiletiermaschine auf die Haltevorrichtung des Transportförderers gesattelt, also mit der offenen Bauchhöhle auf die Haltevorrichtung gestülpt, derart, dass eine Brustbeinplatte des Brustbeins der Karkasse auf der Haltevorrichtung aufliegt und das Brustbein senkrecht von der Haltevorrichtung absteht. Wenn die Haltevorrichtung mit dem Geflügelkörper oder Teilen davon die Messeranordnung erreicht, ist der Geflügelkörper oder Teile davon Hals voraus in Transportrichtung T ausgerichtet, indem die Haltevorrichtung entsprechend positioniert wird oder bereits beim Aufsatteln die entsprechende Ausrichtung gewählt wird. Hals voraus bedeutet, dass die vorzugsweise von Extremitäten, vom Kopf und teilweise auch vom Hals befreiten Geflügelkörper oder Teile davon mit der Halsseite vorauslaufend transportiert werden, so dass ein Brustbeinkammfortsatz des Brustbeins der Karkasse vorauslaufend ist und ein Brustbeinkamm des Brustbeins der Karkasse im Wesentlichen senkrecht zur Brustbeinplatte nach unten ragt.

Die EP 2 606 735 A1 beschreibt eine gattungsgemäße Vorrichtung sowie ein gattungsgemäßes Verfahren.

Zur Vermeidung von Fehlschnitten, z.B. durch das Eindringen der Trennmesser in die Karkasse, ist es erforderlich, dass die Brustkappen mit ihrem Brustbein möglichst mittig in den Spalt A zwischen die Trennmesser geführt bzw. transportiert werden. Schief aufgesattelte Brustkappen oder schief gewachsene Brustbeine verhindern jedoch häufig eine präzise Einführung des Brustbeins zwischen die Trennmesser, so dass bisher bekannte Vorrichtungen den Nachteil aufweisen, dass entstehende Fehlschnitte den Produktionsablauf stören und die Ausbeute entsprechend verringern. Der Versuch, die Gefahr von Fehlschnitten z.B. durch gesteuerte Trennmesser zu reduzieren, führt jedoch wegen des größeren Abstandes der Trennmesser zur Karkasse bzw. zum Brustbein zu Ausbeuteverlusten. Andere Möglichkeiten, die Gefahr von Fehlschnitten zu reduzieren, z.B. durch Zentrierbleche oder dergleichen, führen dazu, dass sich die Brustfilets bereits so weit von der Karkasse lösen, dass z.B. eine halbautomatische Bearbeitung, nämlich das manuelle Entfernen der Brustfilets von der Karkasse, ausgeschlossen ist, da die Brustfilets nicht mehr ausreichend mit der Karkasse verbunden wären.

Der Erfindung liegt somit die Aufgabe zugrunde, eine Vorrichtung zu schaffen, die eine sichere und ausbeuteeffiziente Gewinnung von Einzelbrustfilets gewährleistet. Die Aufgabe besteht weiterhin darin, ein entsprechendes Verfahren vorzuschlagen.

Diese Aufgabe wird erfindungsgemäß durch eine Vorrichtung mit den eingangs genannten Merkmalen gelöst, die dadurch gekennzeichnet ist, dass die Zentrierelemente in Zentrierposition derart zueinanderstehen und so positioniert sind, dass die Zentrierelemente ausgehend von ihren freien Enden mit ihren einander zugekehrten Innenseiten in Transportrichtung T aufeinander zu bis zu einem Minimalabstand B größer Null verlaufen, um das Brustbein bzw. einen Brustbeinkammfortsatz des Brustbeins "einzufangen", wobei der Minimalabstand B zwischen den in der Zentrierposition befindlichen Zentrierelementen kleiner ist als der Spalt A zwischen den Trennmessern, um das Brustbein mittig zwischen die Trennmesser zu führen. Vorzugsweise weisen zumindest die einander zugekehrten Innenseiten jeweils einen bogenförmig oder anderweitig gekrümmten Verlauf auf, wodurch sich eine trichterförmige Verengung bis hin zum Minimalabstand B ergibt. Damit wir das einfache und sichere Zentrieren sichergestellt.

Vor den Trennmessern bedeutet, dass die Geflügelkörper oder Teile davon, beispielsweise die Brustkappe mit ihrem Brustbeinkammfortsatz, beim Transport entlang des Transportpfads in Transportrichtung T erst auf die Zentrierelemente treffen und erst anschließend auf die Trennmesser. Durch das erfindungsgemäße Zentriermittel wird sichergestellt, dass das Brustbein vor dem Eintritt zwischen die Trennmesser unabhängig von der Positionierung der Geflügelkörper oder Teilen davon auf der Haltevorrichtung und anatomischen Abweichungen der Karkasse zuverlässig "eingefangen" und zentriert wird, um es in der zentrierten Position zwischen die Trennmesser zu führen. In der Warteposition außerhalb des Transportpfads kann die Haltevorrichtung mit dem Geflügelkörper oder Teilen davon kollisionsfrei das Zentriermittel passieren. In der Zentrierposition auf dem oder in dem Transportpfad ergibt sich zwingend eine Interaktion zwischen dem Zentriermittel und dem Geflügelkörper oder Teilen davon, nämlich insbesondere ein Eingriff der Zentrierelemente in den Geflügelkörper oder Teile davon. Die erfindungsgemäße Vorrichtung führt somit zu einer deutlich reduzierten Anzahl von Fehlschnitten und entsprechend zu einer erhöhten Ausbeute.

Vorteilhafterweise weist der Transportförderer ein Obertrum und ein Untertrum auf, wobei die Messeranordnung im Bereich des Untertrums angeordnet ist. Dadurch wird das Aufsatteln der Geflügelkörper oder Teilen davon auf die Haltevorrichtung einerseits und das Ausrichten der Geflügelkörper oder Teilen davon in Bezug auf die Messeranordnung vereinfacht, wodurch auch die Zentrierung optimiert wird.

Vorzugsweise ist die Messeranordnung mit dem Zentriermittel an einer bezogen auf den Transportpfad auf und ab bewegbaren Messerschwinge angeordnet. Mit anderen Worten ist die Messerschwinge mindestens vertikal zur Transportebene E bewegbar, nämlich vorzugsweise um eine Schwenkachse M schwenkbar, so dass insbesondere die Trennmesser beim Schneiden in die Brustfilets zur Vermeidung von Kollisionen mit der Karkasse und insbesondere mit der Brustbeinplatte nach unten weg bewegbar sind. Durch die Anordnung von Trennmessern einerseits und Zentrierelementen andererseits an der bzw. auf der gemeinsamen Messerschwinge ist stets die aufeinander abgestimmte Positionierung der Zentrierelemente in Bezug auf die Trennmesser sichergestellt. Die Schwenkbewegung der Messerschwinge kann z.B. über eine Kurvensteuerung oder mittels mindestens eines Pneumatikzylinders ausgeführt werden. Optional kann die Messerschwinge auch noch quer zur Transportrichtung T ausweichbar, z.B. über Federelemente, gelagert sein. Die Schwenkachse M liegt vorzugsweise in der bzw. parallel zur Transportebene E.

Eine bevorzugte Ausführungsform ist dadurch gekennzeichnet, dass jedem Zentrierelement ein Pneumatikzylinder zugeordnet ist, der zum Ausführen der Schwenkbewegung der Zentrierelemente um eine Schwenkachse S ausgebildet und eingerichtet ist. Die Zentrierelemente können auch gemeinsam über ein Betätigungsmittel synchron bewegbar sein. Bevorzugt ist jedoch eine separate und individuelle Ansteuerung der Zentrierelemente. Durch den oder jeden Pneumatikzylinder lässt sich die Schwenkbewegung aus der Warteposition in die Zentrierposition und zurück besonders schnell und präzise ausführen und steuern, wodurch einerseits eine sichere und präzise Zentrierung gewährleistet ist und andererseits eine produktschonende Schwenkbewegung sichergestellt ist.

Zweckmäßigerweise sind die Schwenkachsen S der Zentrierelemente senkrecht zu der vom Transportpfad aufgespannten Transportebene E ausgerichtet. Auch eine geneigte Ausrichtung ist möglich. Bevorzugt stellt die senkrechte Ausrichtung der Schwenkachsen S sicher, dass die Zentrierelemente bzw. mindestens ein Teil davon, vorzugsweise die in den Geflügelkörper eindringenden Abschnitte, in der bzw. parallel zur Transportebene E schwenken und damit parallel zum Brustbein in den Geflügelkörper oder Teile davon eintauchen, um die Karkasse zu zentrieren.

Eine vorteilhafte Weiterbildung zeichnet sich dadurch aus, dass die Zentrierelemente schnittkantenfreie Zentrierfinger sind, wobei freie Enden der Zentrierfinger zum Eintauchen in den Geflügelkörper oder Teile davon nahe dem Brustbein entgegen der Transportrichtung T jeweils zwischen Innenfilet und Außenfilet ausgebildet und geformt sind. Entgegen der Transportrichtung T gesehen tauchen die Zentrierfinger idealerweise zu beiden Seiten gering zum Brustbein beabstandet und unterhalb des Innenfilets sowie das Außenfilet teilweise verdrängend in den Geflügelkörper oder Teile davon ein. Gering beabstandet bedeutet in diesem Zusammenhang, dass die beiden Zentrierfinger das Brustbein sicher "einfangen" können. Schnittkantenfrei im Sinne der Erfindung bedeutet, dass die Zentrierfinger letztlich eine beliebige Form und Kontur aufweisen können, die sicherstellen, dass weder die Innenfilets noch die Außenfilets des Brustfilets beim Eintauchen verletzt werden. Besonders einfach sind abgerundete Kanten, die zum einen einer Verletzung/Beschädigung des Brustfilets vorbeugen und zum anderen das Eintauchen erleichtern und unterstützen. Die beschriebene Ausführung gewährleistet und unterstützt eine präzise und produktschonende Zentrierung des Brustbeins.

Vorteilhafterweise sind die Zentrierelemente mindestens in ihrer Zentrierposition mittels eines Federelementes gegen eine Federkraft ausweichbar ausgebildet und an der Messerschwinge gelagert. Damit sind die Zentrierelemente selbst in der Zentrierposition, in der sie den geringsten Abstand zum Brustbein aufweisen, in der Lage, z.B. bei ungleichmäßiger Struktur der Karkasse oder anderen Störeinflüssen das Brustbein sicher und produktschonend "einzufangen". Insbesondere reduziert sich durch die federnde Ausweichbarkeit der Zentrierelemente die Gefahr von Beschädigungen der Innen- und Außenfilets. Die Federelemente sind zum einen am Zentrierelement und zum anderen an der Messerschwinge befestigt, wobei die Befestigung auch außerhalb der Messerschwinge erfolgen kann. Anstelle der Federelemente können auch andere Dämpfungselemente eingesetzt werden.

Besonders bevorzugt sind die Zentrierelemente mittels des Federelementes um eine Schwenkachse F schwenkbar, wobei die Schwenkachsen F in der Zentrierposition im Wesentlichen parallel zur Transportrichtung T ausgerichtet sind. Die Schwenkachsen F für die federnde Ausweichbewegung der Zentrierelemente einerseits und die Schwenkachsen S für die Bewegung der Zentrierelemente aus der Warte- in die Zentrierposition und zurück weichen bezüglich ihrer Ausrichtung entsprechend bevorzugt voneinander, um die Bewegungen einfach und präzise überlagern zu können. Die Ausrichtung der Schwenkachsen F kann jedoch auch variieren. Sämtliche vorgenannten Schwenkbewegungen sind auch zur Schwenkbewegung der Messerschwinge um die Schwenkachse M überlagerbar.

Besonders bevorzugt sind die Pneumatikzylinder zur Steuerung der Schwenkbewegung um die Schwenkachse S mit einer Steuerungs- und/oder Regelungseinrichtung verbunden. Dadurch lassen sich die Schwenkbewegungen individuell und präzise auf den jeweiligen Bearbeitungsprozess, z.B. auf die Transportgeschwindigkeit des Transportförderers oder dergleichen, abstimmen, um eine präzise und sichere Zentrierung sicherzustellen.

Vorteilhafterweise weisen die Zentrierelemente beim Schwenken um die Schwenkachse S aus der Warteposition in die Zentrierposition eine Hauptbewegungskomponente entgegen der Transportrichtung T und beim Schwenken aus der Zentrierposition in die Warteposition eine Hauptbewegungskomponente in Transportrichtung T auf. Optional ist auch eine lineare Bewegung möglich. Allerdings ist eine Schwenkbewegung bevorzugt, wobei sich beim Schwenken immer mehrere Richtungskomponenten ergeben. Entscheidend ist, dass die resultierende Hauptbewegungskomponente in der Zentrierposition der Zentrierelemente der Transportrichtung T entgegengerichtet ist, so dass die Geflügelkörper oder Teile davon mit ihrer Halsseite frontal auf die Zentrierelemente treffen, und dass die resultierende Hauptbewegungskomponente beim Schwenken in die Warteposition in Transportrichtung T gerichtet ist, um die Zentrierelemente mit Bezug auf die Brustfilets beschädigungsfrei außer Eingriff mit dem Geflügelkörper oder Teilen davon zu bringen.

Eine bevorzugte Ausführungsform ist dadurch gekennzeichnet, dass die Größe des Spaltes A zwischen den Trennmessern fest aber einstellbar ausgebildet ist und vorzugsweise zwischen 6 und 8 Millimeter beträgt, und dass die Größe des Minimalabstandes B zwischen den Zentrierelementen in der Zentrierposition fest aber einstellbar ist und vorzugsweise 5 Millimeter beträgt. Fest bedeutet, dass der Abstand auf einen gewünschten Wert voreingestellt ist, schließt aber eine ausweichende Bewegung während des Betriebs mit einer temporären Abstandsveränderung nicht aus. Einstellbar bedeutet widerspruchsfrei zur festen Einstellung, dass diese Einstellung auf den gewünschten Wert veränderbar ist, nämlich insbesondere bei einer außer Betrieb befindlichen Vorrichtung, beispielsweise wenn größere Geflügelkörper oder Teile davon mit einem dickeren Brustbein verarbeitet werden sollen. Mit dieser Ausbildung ist ein mittiges und kollisionsfreies Übergeben bzw. Zuführen des Brustbeins von den Zentrierelementen zwischen die Trennmesser sichergestellt.

Besonders bevorzugt sind die Trennmesser rotierend antreibbare Kreismesser, die beabstandet zueinander einen zur Aufnahme des Brustbeins dienenden Spalt A bildend angeordnet sind. Mit den Kreismessern als Trennmesser ist das Schneiden der Brustfilets an den zentriert zugeführten Karkassen besonders einfach und präzise gewährleistet.

Vorteilhafterweise sind die Kreismesser entgegen der Transportrichtung T der Geflügelkörper oder Teilen davon angetrieben. Anders ausgedrückt sind die Kreismesser gegenläufig zur Transportrichtung T angetrieben. Optional ist aber auch eine mitlaufende Antriebsrichtung der Kreismesser möglich. Letztlich kann die Antriebsrichtung der beiden Kreismesser gleich oder unterschiedlich sein. Gegenläufig können die Kreismesser z.B. gegen die Transportrichtung T angetrieben sein. Mit der gegenläufigen Antriebsrichtung der Kreismesser wird eine zusätzlicher Zentriereffekt erreicht.

Die erfindungsgemäße Vorrichtung ist besonders bevorzugt zum Schneiden von Brustfilets an Brustkappen als Teil eines Geflügelkörpers ausgebildet und eingerichtet, insbesondere dann, wenn die Brustkappen frei vom Gabelbein der Messeranordnung zugeführt werden. Optional ist die Vorrichtung auch zum Schneiden von Brustfilets an oder von Vorderhälften, deren Karkassen mit oder ohne Gabelbein zugeführt werden, ausgebildet und eingerichtet. Insbesondere bei der halbautomatischen Gewinnung von Einzelbrustfilets von Brustkappen in halbautomatischen Brustkappenfiletiermaschinen kommen die genannten Vorteile und Effekte der Zentrierung zur Geltung.

Die Aufgabe wird auch durch ein Verfahren mit den eingangs genannten Schritten dadurch gelöst, dass das Brustbein bzw. ein Brustbeinkammfortsatz des Brustbeins "eingefangen" wird, indem die Zentrierelemente in Zentrierposition derart zueinanderstehen und so positioniert sind, dass die Zentrierelemente ausgehend von ihren freien Enden mit ihren einander zugekehrten Innenseiten in Transportrichtung T aufeinander zu bis zu einem Minimalabstand B größer Null verlaufen, wobei das Brustbein mittig zwischen die Trennmesser geführt wird, indem der Minimalabstand B zwischen den in der Zentrierposition befindlichen Zentrierelementen kleiner ist als der Spalt A zwischen den Trennmessern.

Vorteilhafterweise tauchen Zentrierfinger als Zentrierelemente mit ihren freien Enden beim Schwenken um Schwenkachsen S aus der Warteposition in die Zentrierposition zu beiden Seiten des Transportpfads in den Geflügelkörper oder Teile davon nahe dem Brustbein jeweils zwischen Innenfilet und Außenfilet ein und zentrieren dabei das Brustbein vor dem Eintritt zwischen die Trennmesser.

Eine Weiterbildung ist dadurch gekennzeichnet, dass das Bewegen der Zentrierelemente aus der Warteposition in die Zentrierposition mit einer resultierenden Hauptbewegungskomponente gegen die Transportrichtung T erfolgt und das Bewegen aus der Zentrierposition in die Warteposition mit einer resultierenden Hauptbewegungskomponente in Transportrichtung erfolgt.

Vorzugsweise treffen die in Transportrichtung T transportierten Geflügelkörper oder Teile davon auf bereits aus der Warteposition in die Zentrierposition bewegte und dann stehende Zentrierelemente. Mit anderen Worten ist die Schwenkbewegung in die Zentrierposition bereits abgeschlossen, wenn das Brustbein der Karkasse zwischen den Zentrierelementen "eingefädelt" wird.

Vorteilhafterweise werden die Zentrierelemente mindestens beim Bewegen aus der Zentrierposition in die Warteposition mindestens temporär auf eine Geschwindigkeit beschleunigt, die höher als die Transportgeschwindigkeit des Transportförderers ist. Damit eilen die Zentrierelemente dem Transportförderer quasi voraus, um die Zentrierelemente produktschonend aus dem kontinuierlich weiter in Transportrichtung T transportieren Geflügelkörper oder Teilen davon zu bewegen.

Besonders bevorzugt wird das Verfahren mit einer Vorrichtung nach einem oder mehreren der Ansprüche 1 bis 14 ausgeführt.

Die sich daraus ergebenden Vorteile und Effekte wurden bereits im Zusammenhang mit der Vorrichtung beschrieben, weshalb zur Vermeidung von Wiederholungen auf die vorstehenden Passagen verwiesen wird.

Weitere zweckmäßige und/oder vorteilhafte Merkmale und Weiterbildungen zur Vorrichtung und zum Verfahren ergeben sich aus den Unteransprüchen und der Beschreibung. Besonders bevorzugte Ausführungsformen der Vorrichtung sowie das Verfahren werden anhand der beigefügten Zeichnung näher erläutert. In der Zeichnung zeigt:

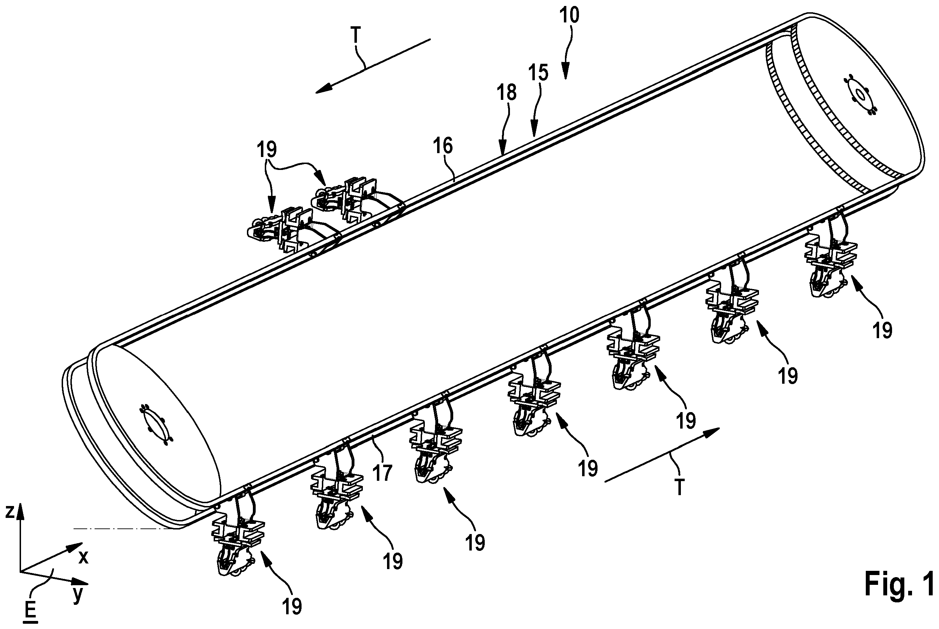

- Fig. 1: eine schematische Darstellung einer erfindungsgemäßen Vorrichtung in perspektivischer Ansicht
- Fig. 2a: eine schematische Darstellung einer auf einer Haltevorrichtung eines Transportförderers fixierten Brustkappenkarkasse ohne Gabelbein zur Erläuterung der Anatomie des zu bearbeitenden Geflügelkörpers oder Teilen davon,
- Fig. 2b: die Darstellung gemäß Figur 1 in Vorderansicht entgegen der Transportrichtung T gesehen, wobei die Brustfilets an der Karkasse angedeutet sind,

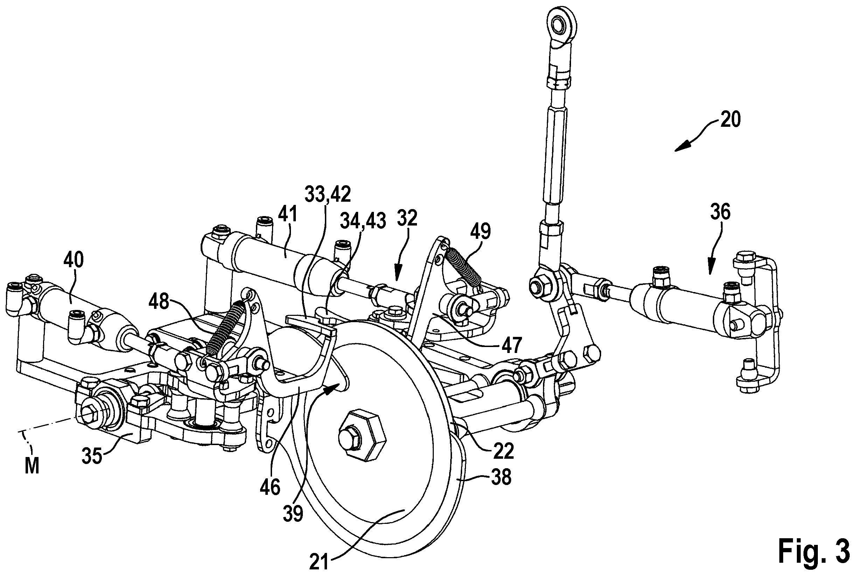

- Fig. 3: eine schematische Darstellung der Messeranordnung der Vorrichtung gemäß Figur 1 in perspektivischer Ansicht, wobei sich die Zentrierelemente in ihrer Zentrierposition befinden,

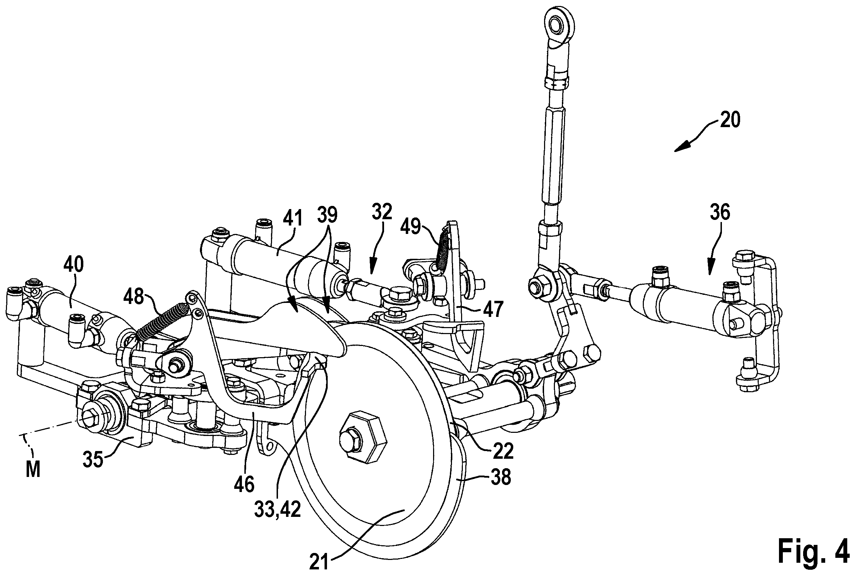

- Fig. 4: die Darstellung gemäß Figur 3 mit Zentrierelementen in ihrer Warteposition,
- Fig. 5: eine Draufsicht auf die Messeranordnung gemäß Figur 3,
- Fig. 6: eine Draufsicht auf die Messeranordnung gemäß Figur 4, und
- Fig. 7: eine Vorderansicht der Messeranordnung gemäß Figur 3 entgegen der Transportrichtung T gesehen.

Die in der Zeichnung dargestellte Vorrichtung ist zum Schneiden, also insbesondere Einschneiden, Vorschneiden oder Abschneiden von Brustfilets einer Brustkappe eines Geflügelkörpers entlang des Brustbeins ausgebildet und eingerichtet. Die Vorrichtung ist jedoch in gleicher Weise zum Schneiden von Brustfilets einer Vorderhälfte eines Geflügelkörpers ausgebildet und eingerichtet.

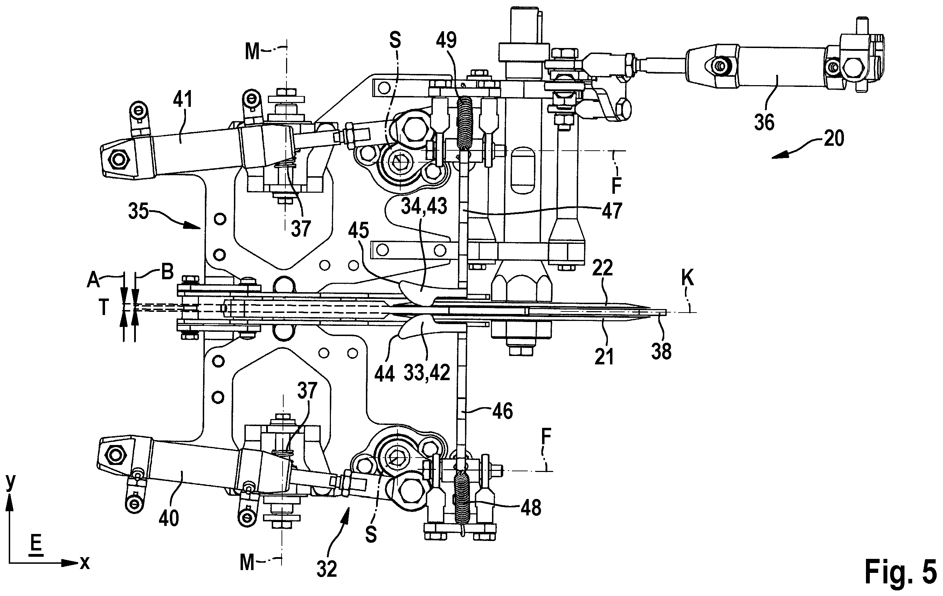

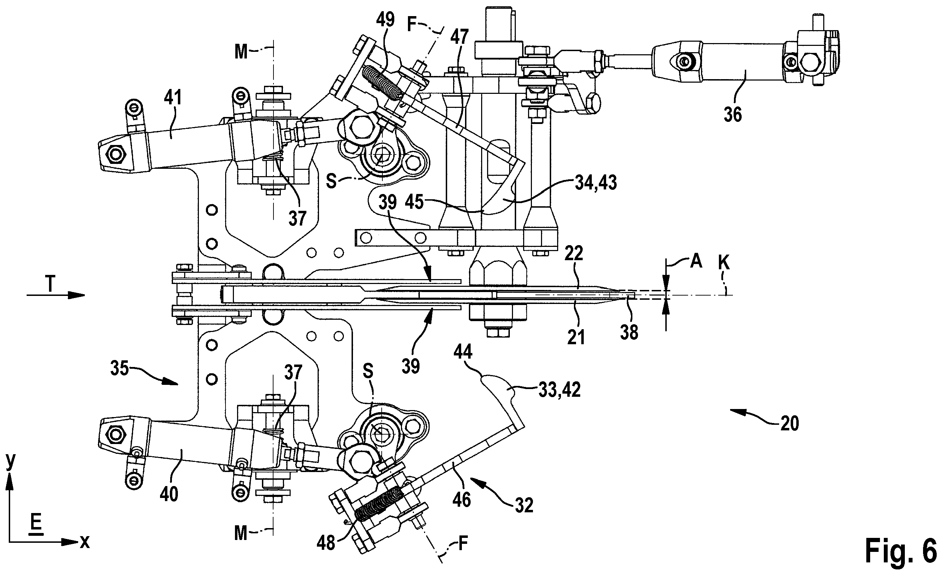

Die dargestellte Vorrichtung 10 ist zum Schneiden in mindestens im Bereich eines Brustbeins 11 einer Karkasse 12 von Geflügelkörpern 13 oder Teilen davon miteinander verbundenen Brustfilets 14 entlang des Brustbeins 11 ausgebildet und eingerichtet und umfasst eine Transportvorrichtung 15 mit einem umlaufend antreibbaren Transportförderer 18 zum Transportieren der zu bearbeitenden Geflügelkörper 13 oder Teilen davon Hals voraus entlang eines eine Transportebene E definierenden Transportpfads in Transportrichtung T, mindestens eine am Transportförderer 18 angeordnete Haltevorrichtung 19 zum Aufnehmen und Halten der Geflügelkörper 13 oder Teilen davon während des Transports entlang des Transportpfads in der Transportebene E, eine entlang des Transportpfads im Bereich des Transportförderers 18 angeordnete Messeranordnung 20 mit einem Paar Trennmesser 21, 22 zum Schneiden der Brustfilets 14 entlang des Brustbeins 11, wobei zu beiden Seiten der Mittelachse K des Transportpfads jeweils ein Trennmesser 21, 22 angeordnet ist, derart, dass zwischen den beiden Trennmessern 21, 22 ein Spalt A zum Transport der zu bearbeitenden Geflügelkörper 13 oder Teilen davon mit dem Brustbein 11 durch die einander gegenüberliegenden Trennmesser 21, 22 gebildet ist, wobei der Messeranordnung 20 ein Zentriermittel 32 zugeordnet ist, das zum Vorzentrieren des Brustbeins 11 der Karkasse 12 ausgebildet und eingerichtet ist und das zwei Zentrierelemente 33, 34 umfasst, die jeweils aus einer Warteposition (siehe z.B. Figur 6), in der die Zentrierelemente 33, 34 außerhalb des Transportpfads positioniert sind, in eine Zentrierposition (siehe z.B. Figur 5), in der die Zentrierelemente 33, 34 auf dem Transportpfad positioniert sind, und zurück bewegbar sind, wobei die Zentrierelemente 33, 34 in ihrer Zentrierposition in Transportrichtung T der Geflügelkörper 13 oder Teilen davon mindestens teilweise vor den beiden Trennmessern 21, 22 liegen.

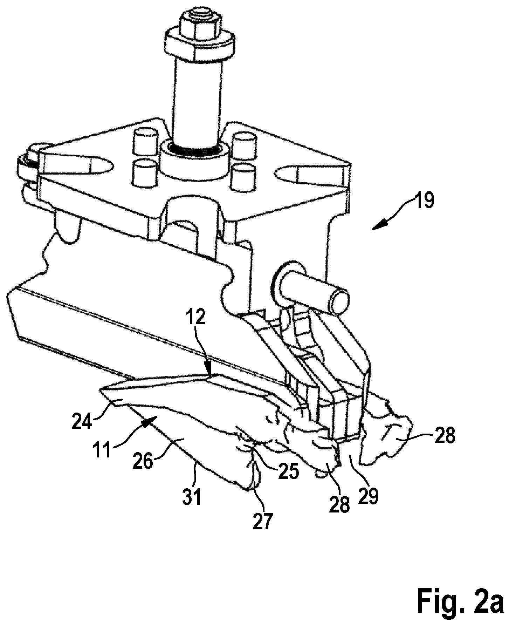

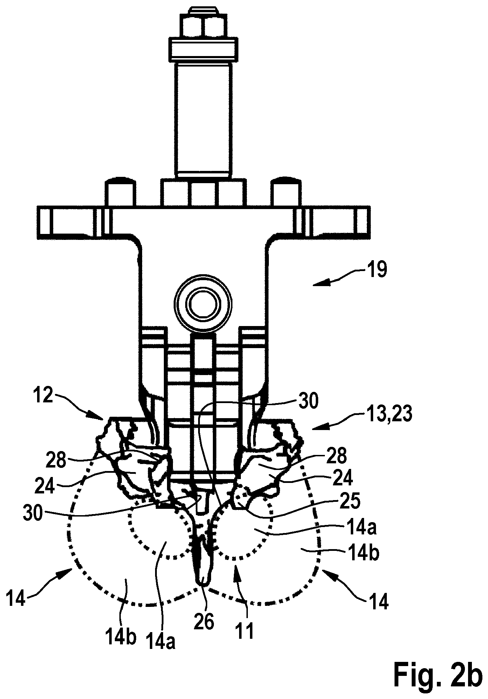

Zum besseren Verständnis der Erfindung wird zunächst die Anatomie der mittels der Erfindung zu bearbeitenden Geflügelkörper 13 oder Teilen davon beschrieben. Die erfindungsgemäße Vorrichtung 10 ist insbesondere zum automatischen oder halbautomatischen Bearbeiten von so genannten Brustkappen 23 ausgebildet und eingerichtet, bei denen die Karkasse 12 das Brustbein 11 mit Rippenansätzen 24 und optional auch das Gabelbein umfasst, wobei sich Brustfilets 14, also zu beiden Seiten des Brustbeins 11 jeweils ein Innenfilet 14a und ein Außenfilet 14b, noch an der Karkasse 12 befinden bzw. mindestens teilweise mit dieser verbunden sind. Das Brustbein 11 umfasst eine Brustbeinplatte 25, die in aufgesatteltem Zustand der Karkasse 12 auf der Haltevorrichtung 19 aufliegt und sich bei einer Positionierung der Haltevorrichtung 19 im Bereich des Transportförderers 18 unmittelbar vor dem Passieren der Messeranordnung 20 im Wesentlichen parallel zur Transportebene E erstreckt. Ein Brustbeinkamm 26 erstreckt sich im Wesentlichen senkrecht zur Brustbeinplatte 25. Einfach ausgerückt bilden die Brustbeinplatte 25 und der Brustbeinkamm 26 in Vorderansicht (siehe insbesondere Figur 2b) eine T-Form, mit der Brustbeinplatte 25 als horizontalem T-Strich und dem Brustbeinkamm 26 als vertikalem Hauptstrich. Der Brustbeinkamm 26 weist in Transportrichtung T vorauslaufend einen Brustbeinkammfortsatz 27 auf. In Transportrichtung T noch weiter vorauslaufend weist die Karkasse 12 bzw. der Geflügelkarkassenabschnitt Schultergelenke 28 auf. Im gezeigten Beispiel fehlt der Karkasse 12 bereits das Gabelbein. Der Bereich der Schultergelenke 28 markiert auch den Hals(-ansatz) 29. In anderen Beispielen kann das Gabelbein noch im Bereich der Schultergelenke 28 angeordnet sein. Die Innenfilets 14a liegen zu beiden Seiten des Brustbeins 11 in der durch die Brustbeinplatte 25 und den Brustbeinkamm 26 gebildeten Kehle 30. Die Außenfilets 14b decken die Innenfilets 14a ursprünglich vollständig ab und erstrecken sich von Rippenansätzen 24 bis zum freien Ende 31 des Brustbeinkamms 26.

Für den Fall, dass die zu bearbeitenden Brustkappen 23 noch nicht vorgeschnitten sind, sich die Außenfilets 14b also noch vollständig an der Karkasse 12 befinden und die Innenfilets 14a vollständig abdecken, ist das Schneiden der Brustfilets 14 ein Einschneiden entlang des Brustbeins 11, wobei die Trennmesser 21, 22 zu beiden Seiten des Brustbeins 11 eintauchen und die Verbindung vom Außenfilet 14b und vom Innenfilet 14a zum Brustbein 11 lösen. Die dann im Bereich des Brustbeins 11 gelösten Einzelbrustfilets, also nur die Außenfilets 14b oder auch das Außenfilet 14b und das Innenfilet 14a, können dann z.B. manuell von der Karkasse 12 gezogen werden. Im anderen Fall, bei dem die Brustfilets 14 und insbesondere die Außenfilets 14b bereits teilweise von der Karkasse 12 eines entweideten Geflügelkörpers 13 oder Teilen davon gelöst sind und zu beiden Seiten vom Brustbein 11 herabhängen und nur noch im Bereich des freien Endes 31 des Brustbeinkamms 26 miteinanderverbunden und an der Karkasse 12 befestigt sind, ist das Schneiden der Brustfilets 14 ein Abschneiden entlang des Brustbeins 11.

Die nachfolgend beschriebene Erfindung bezieht sich auf das Schneiden von Brustfilets 14 in allen oben genannten Konstellationen.

Diese Vorrichtung 10 zeichnet sich erfindungsgemäß dadurch aus, dass die Zentrierelemente 33, 34 in Zentrierposition derart zueinanderstehen und so positioniert sind, dass die Zentrierelemente 33, 34 ausgehend von ihren freien Enden 44, 45 mit ihren einander zugekehrten Innenseiten in Transportrichtung T aufeinander zu bis zu einem Minimalabstand B größer Null verlaufen, um das Brustbein 11 bzw. einen Brustbeinkammfortsatz 27 des Brustbeins 11 "einzufangen", wobei der Minimalabstand B zwischen den in der Zentrierposition befindlichen Zentrierelementen 33, 34 kleiner ist als der Spalt A zwischen den Trennmessern 21, 22, um das Brustbein 11 mittig zwischen die Trennmesser 21, 22 zu führen. Die Zentrierelemente 33, 34 liegen nicht vollständig vor den Trennmessern 21, 22. Vorzugsweise liegen die Zentrierelemente 33, 34 in der Zentrierposition mit ihren freien Enden mindestens teilweise vor den Trennmessern 21, 22.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Vorzugsweise weist der Transportförderer 18 ein Obertrum 16 und ein Untertrum 17 auf, wobei die Messeranordnung 20 im Bereich des Untertrums 17 angeordnet ist. Obertrum 16 und Untertrum 17 können aber auch in einer Ebene, also z.B. nebeneinander liegen. Bevorzugt sind auch mehrere Haltevorrichtungen 19 am Transportförderer 18 angeordnet.

Der Begriff Transportpfad bezieht sich auf die Strecke entlang des Transportförderers 18, auf der Bearbeitungsstationen angeordnet sind oder sein können, also im Wesentlichen entlang des Obertrums 16 und des Untertrums 17, und beschreibt letztlich einen dreidimensionalen Bereich, den die Geflügelkörper 13 beim Transport in Transportrichtung T zurücklegen bzw. passieren. Wenn etwas auf dem oder im Transportpfad der Geflügelkörper 13 liegt, z.B. die Trennmesser, kollidiert der Geflügelkörper 13 damit bzw. kommt mit diesen in Eingriff bzw. interagiert mit diesen.

Die Resultierende aus dem Transportpfad ist die Transportebene E. Mit anderen Worten definiert der Transportpfad die Transportebene E, die entsprechend nicht mathematisch zu verstehen ist. In den Figuren 2b, 5, 6 und 7 ist die Transportebene E angedeutet. Die Transportrichtung T liegt in der Transportebene E bzw. parallel dazu. Vorzugsweise ist die Transportebene E horizontal ausgerichtet. Die Transportebene E kann aber auch geneigt ausgerichtet sein.

Die Messeranordnung 20 ist mit dem Zentriermittel 32 an einer bezogen auf den Transportpfad auf und ab bewegbaren Messerschwinge 35 angeordnet. Die Messerschwinge 35 ist vorzugsweise um eine Schwenkachse M schwenkbar. Das Schwenken kann z.B. mittels einer Kurvensteuerung erfolgen. Bevorzugt ist der Messerschwinge 35 jedoch mindestens ein Pneumatikzylinder 36 zugeordnet, der bevorzugt mit einer nicht explizit dargestellten Steuerungs- und/oder Regelungseinrichtung verbunden ist. An diese Steuerungs- und/oder Regelungseinrichtung kann z.B. auch der ebenfalls nicht explizit dargestellte Antrieb für den Transportförderer 18 angeschlossen sein. An die Steuerungs- und/oder Regelungseinrichtung können auch noch weitere Komponenten, wie z.B. Messeinrichtungen, Sensoren oder dergleichen angeschlossen sein. Wie erwähnt ist die Messerschwinge 35 um die Schwenkachse M schwenkbar, derart, dass die Messeranordnung 20 und mit ihr das Zentriermittel 32 nach unten im Wesentlichen senkrecht zur Transportebene E und zurück bewegbar ist, um den Abstand der Trennmesser 21, 22 zur Karkasse 12 zu verändern. Zusätzlich kann die Messerschwinge 35 auch quer zur Transportrichtung T ausweichbar gelagert sein, beispielsweise gegen eine von Federelementen 37 aufgebrachte Federkraft.

Optional kann zwischen den Trennmessern 21, 22 z.B. ein plattenartiges Schutzelement 38 angeordnet sein, das entgegen der Transportrichtung T der Geflügelkörper 13, also mindestens im Einlaufbereich des Brustbeins 11 zwischen den Trennmessern 21, 22, aus den Trennmessern 21, 22 hervorsteht. Das Schutzelement 38 ist vorzugsweise federnd gelagert und steht mit einer Kante entgegen der Transportrichtung T aus den Trennmessern 21, 22 hervor, so dass einlaufende Geflügelkörper 13 bzw. deren (ggf. auch herabhängenden) Außenfilets 14b zunächst nur auf das Schutzelement 38 treffen. Mittels des Brustbeins 11 ist das Schutzelement 38 gegen die Federkraft nach unten wegdrückbar, um die Trennmesser 21, 22 quasi freizugeben. Dazu ist das Schutzelement 38 beispielsweise schwenkbar an der Messerschwinge 35 gelagert. Das Schutzelement 38 kann aber auch fest und unnachgiebig an der Messerschwinge 35 befestigt sein. Neben dem Schutzelement 38 können weitere feste oder nachgiebige Schutzelemente im Bereich der Trennmesser 21, 22 angeordnet sein.

Des Weiteren besteht die Möglichkeit, zu beiden Seiten der Trennmesser 21, 22 Spannelemente 39 zum Spannen der Brustfilets 14 im Bereich des Brustbeins 11 während des Schneidvorgangs vorzusehen. Die Spannelemente 39 sind z.B. optional synchron schwenkbar gelagerte, plattenförmige Spannkörper, die aus einer unteren Warteposition in eine obere Spannposition und zurück schwenkbar sind. Die Spannkörper können z.B. mittels eines Pneumatikzylinders oder dergleichen als Betätigungsmittel betätigbar und steuerbar sein. Vorzugsweise ist das Betätigungsmittel mit der Steuerungs- und/oder Regelungseinrichtung verbunden, um eine insbesondere mit den Zentrierelementen 33, 34 abgestimmte Bewegung ausüben zu können.

In einer bevorzugten Ausführungsform ist jedem Zentrierelement 33, 34 ein Pneumatikzylinder 40, 41 zugeordnet, der zum Ausführen der Schwenkbewegung der Zentrierelemente 33, 34 um eine Schwenkachse S ausgebildet und eingerichtet ist. In anderen Fällen können die Zentrierelemente 33, 34 auch mittels anderer Betätigungsorgane bewegt werden. Vorzugsweise sind die Pneumatikzylinder 40, 41 zur Steuerung der Schwenkbewegung um die Schwenkachse S mit der Steuerungs- und/oder Regelungseinrichtung verbunden. Es ist auch möglich, dass die beiden Zentrierelemente 33, 34 synchron mittels eines gemeinsamen Betätigungsorgans bewegbar sind. Vorzugsweise sind die Schwenkachsen S der Zentrierelemente 33, 34 senkrecht zu der vom Transportpfad aufgespannten Transportebene E ausgerichtet. Selbstverständlich können die Schwenkachsen S abweichend von einer senkrechten Ausrichtung auch geneigt zur Transportebene E ausgerichtet sein. Die Schwenkachsen S der beiden Zentrierelemente 33, 34 verlaufen bevorzugt parallel zueinander.

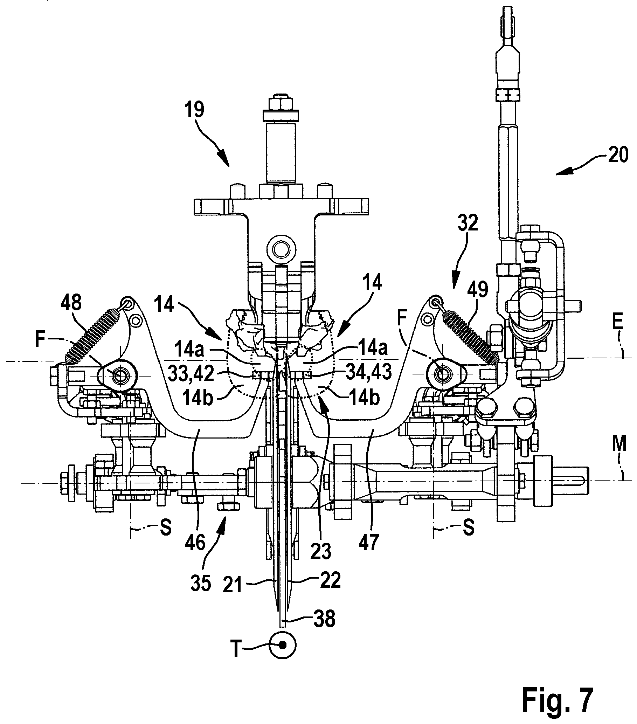

Die Zentrierelemente 33, 34 können eine beliebige Grundform aufweisen. Bevorzugt sind die Zentrierelemente 33, 34 schnittkantenfreie Zentrierfinger 42, 43, wobei freie Enden 44, 45 der Zentrierfinger 42, 43 zum Eintauchen in den Geflügelkörper 13 oder Teile davon nahe dem Brustbein 11 entgegen der Transportrichtung T jeweils zwischen Innenfilet 14a und Außenfilet 14b ausgebildet und geformt sind. Die Zentrierfinger 42, 43 können z.B. fest aber lösbar und hinsichtlich ihrer Position und Ausrichtung vorzugsweise auch einstellbar an Stellarmen 46, 47 angeordnet sein. Die Stellarme 46, 47 sind schwenkbar um die Schwenkachsen S gelagert. Insbesondere in der Figur 7 ist zu erkennen, was es bedeutet, wenn die Zentrierfinger 42, 43 zu beiden Seiten neben dem Brustbein 11 zwischen Innenfilet 14a und Außenfilet 14b eintauchen. Entgegen der Transportrichtung T betrachtet tauchen die Zentrierfinger 42, 43 vorzugsweise unterhalb der Innenfilets 14a und dabei das Außenfilet 14b mindestens teilweise verdrängend in den Geflügelkörper 13 ein. Die Zentrierfinger 42, 43 können aber z.B. auch spatelförmige oder zylindrisch geformte Zentrierkörper sein.

Die Zentrierelemente 33, 34 sind vorzugsweise mindestens in ihrer Zentrierposition mittels eines Federelementes 48, 49 gegen eine Federkraft ausweichbar ausgebildet und an der Messerschwinge 35 gelagert. Mit anderen Worten sind die Zentrierelemente 33, 34 durch die Federelemente 48, 49 vorgespannt an der Messerschwinge 35 angeordnet. Durch den Geflügelkörper 13 oder Teile davon können die Zentrierelemente 33, 34 gegen die Federkraft nach außen geschwenkt werden. Vorzugsweise sind die Zentrierelemente 33, 34, im vorgenannten Beispiel die Stellarme 46, 47, schwenkbar um die Schwenkachsen F an der Messerschwinge 35 gelagert, wobei die Schwenkbewegungen um die Schwenkachsen S einerseits und die Schwenkachsen F andererseits auch überlagerbar sind. Die vorgenannten Schwenkbewegungen sind im Übrigen auch mit der Schwenkbewegung der Messerschwinge 35 um die Schwenkachse M überlagerbar. Die Schwenkachsen F sind in der Zentrierposition der Zentrierelemente 33,3 4 im Wesentlichen parallel zur Transportrichtung T ausgerichtet.

Optional weisen die Zentrierelemente 33, 34 beim Schwenken um die Schwenkachse S aus der Warteposition in die Zentrierposition eine Hauptbewegungskomponente entgegen der Transportrichtung T und beim Schwenken aus der Zentrierposition in die Warteposition eine Hauptbewegungskomponente in Transportrichtung T auf. Genauer führen zumindest die freien Enden 44, 45 der Zentrierfinger 42, 43 die genannten Bewegungen auf, um möglichst parallel zum Brustbein 11 in den Geflügelkörper 13 ein- und austauchen zu können. Die Zentrierelemente 33, 34 sind bevorzugt derart gesteuert, dass die Zentrierelemente 33, 34 bereits in der Zentrierposition stehen, wenn die Geflügelkörper 13 oder Teile davon in den Wirkbereich der Zentrierelemente 33, 34 kommen.

Die Größe des Spaltes A zwischen den Trennmessern 21, 22 ist fest aber einstellbar ausgebildet und beträgt vorzugsweise zwischen 6 und 8 Millimeter, und die Größe des Minimalabstandes B zwischen den Zentrierelementen 33, 34 in der Zentrierposition ist fest aber einstellbar und beträgt vorzugsweise 5 Millimeter. Die Abstände sind z.B. in Abhängigkeit der Größe der zu bearbeitenden Geflügelkörper 13 auch in anderen Größenbereichen einstellbar. Vorzugsweise ist der Minimalabstand B grundsätzlich kleiner als die Größe des Spaltes A.

Die Trennmesser 21, 22 können z.B. einfache Klingen oder dergleichen sein. Bevorzugt sind die Trennmesser 21, 22 gemäß den dargestellten Ausführungsformen rotierend antreibbare Kreismesser, die beabstandet zueinander einen zur Aufnahme des Brustbeins 11 dienenden Spalt A bildend angeordnet sind. Die Kreismesser sind über einen gemeinsamen Antrieb oder separate Antriebsmittel antreibbar. Die Drehrichtung bzw. Antriebsrichtung der Kreismesser können variieren. Vorzugsweise sind die Kreismesser entgegen der Transportrichtung T der Geflügelkörper 13 oder Teilen angetrieben. Allerdings ist auch ein in Transportrichtung T mitlaufender Antrieb möglich. Das oder jedes Antriebsmittel ist optional auch mit der Steuerungs- und/oder Regelungseinrichtung verbunden.

Wie vorstehend bereits beschrieben, ist die Vorrichtung 10 zum Schneiden von Brustfilets 14 an Geflügelkörpern 13 oder Teilen davon ausgebildet und eingerichtet. Dazu gehören z.B. auch Vorderhälften von Geflügelkörpern. Besonders bevorzugt ist die Vorrichtung 10 jedoch zum Schneiden von Brustfilets 14 an Brustkappen 23 als Teil eines Geflügelkörpers 13 ausgebildet und eingerichtet.

Im Folgenden wird das Verfahren anhand der Zeichnung näher erläutert.

Das Verfahren dient und eignet sich zum Schneiden in mindestens im Bereich eines Brustbeins 11 einer Karkasse 12 von Geflügelkörpern 13 oder Teilen davon miteinander verbundenen Brustfilets 14 entlang des Brustbeins 11. Das können z.B. Schnitte entlang des Brustbeins 11 sein, um die Brustfilets 14 einzeln vollautomatisch oder halbautomatisch vollständig von der Karkasse 12 zu trennen, wenn die Brustfilets 14 bereits vorgelöst und mindestens teilweise von der Karkasse 12 herabhängen, indem der letzte verbliebene Verbindungssteg zwischen den beiden Brustfilets 14 entlang des Brustbeinkamms 26 geschnitten wird, oder zum Einschneiden der noch vollständig mit der Karkasse 12 verbundenen Brustfilets 14 entlang des Brustbeins 11, um die Brustfilets 14 anschließend z.B. manuell von der Karkasse 12 zu ziehen.

Zum Schneiden der Geflügelkörper 13 oder Teilen davon werden die zu bearbeitenden Geflügelkörper 13 oder Teile davon Hals(-ansatz) 29 voraus entlang eines eine Transportebene E definierenden Transportpfads in Transportrichtung T transportiert, wobei die Geflügelkörper 13 oder Teile davon mittels eines umlaufend angetriebenen Transportförderers 18 entlang des Transportpfads zu und durch mindestens eine Messeranordnung 20 transportiert werden. Der Geflügelkörper 13 oder Teile davon, z.B. eine Vorderhälfte oder eine Brustkappe, fädelt mit dem Brustbein 11 der Karkasse 12 zwischen ein Paar Trennmesser 21, 22 der Messeranordnung 20. Durch den Weitertransport der Geflügelkörper 13 oder Teile davon entlang des Transportpfads kommen die Trennmesser 21, 22 in Eingriff mit den Brustfilets 14 und schneiden die Brustfilets 14 zu beiden Seiten des Brustbeins 11 entlang des Brustbeins 11. Das Brustbein 11 wird dabei vor dem Eingriff der Trennmesser 21, 22 in die Brustfilets 14 mittels eines Zentriermittels 32 vorzentriert, indem Zentrierelemente 33, 34 des Zentriermittels 32 von beiden Seiten des Transportpfads aus einer Warteposition außerhalb des Transportpfads in eine Zentrierposition auf dem Transportpfad bewegt werden, und dass die Zentrierelemente 33, 34 zurück in die Warteposition bewegt werden, sobald sich ein Brustbeinkammfortsatz 27 des Brustbeins 11 der Karkasse 12 zwischen den Trennmessern 21, 22 befindet. Dadurch werden die Brustfilets 14 wahlweise vollständig von der Karkasse 12 getrennt oder zumindest im Bereich des Brustbeins 11 von der Karkasse 12 gelöst, um sie anschließend automatisch oder manuell abzuziehen.

Dieses Verfahren zeichnet sich erfindungsgemäß dadurch aus, dass das Brustbein 11 bzw. ein Brustbeinkammfortsatz 27 des Brustbeins 11 "eingefangen" wird, indem die Zentrierelemente 33, 34 in Zentrierposition derart zueinanderstehen und so positioniert sind, dass die Zentrierelemente 33, 34 ausgehend von ihren freien Enden 44, 45 mit ihren einander zugekehrten Innenseiten in Transportrichtung T aufeinander zu bis zu einem Minimalabstand B größer Null verlaufen, wobei das Brustbein 11 mittig zwischen die Trennmesser 21, 22 geführt wird, indem der Minimalabstand B zwischen den in der Zentrierposition befindlichen Zentrierelementen 33, 34 kleiner ist als der Spalt A zwischen den Trennmessern 21, 22. Anders ausgedrückt wird das Brustbein 11 mittels der Zentrierelemente 33, 34 "gefangen" und zentriert an die bzw. zwischen die Trennmesser 21, 22 übergeben. Sobald sich die vorauslaufende Spitze des Brustbeinkamms 26 sicher zwischen den Trennmessern 21, 22 befindet, werden die Zentrierelemente 33, 34 zurückgeschwenkt, um den Weg/Transportpfad wieder frei zu machen..

Vorzugsweise erfolgt das Aufsatteln der Geflügelkörper 13 oder Teilen davon im Bereich eines Obertrums 16 des Transportförderers 18, während das Schneiden im Bereich eines Untertrums 17 des Transportförderers 18 erfolgt. Das Schneiden bzw. der ausgeführte Schnitt kann der finale Schnitt sein, z.B. bei einem (voll-)automatischen Trennen in einer Brustkappenfiletiermaschine. Der Schnitt kann aber auch der Initialschnitt sein, indem die Brustfilets 14 im Bereich des Brustbeins 11 nur von der Karkasse 12 gelöst werden, um die Brustfilets 14 anschließend manuell von der Karkasse zu ziehen, z.B. bei einer halbautomatischen Brustkappenfiletiermaschine.

Das Zentrieren der Geflügelkörper 13 oder Teilen davon erfolgt, indem Zentrierfinger 42, 43 als Zentrierelemente 33, 34 mit ihren freien Enden 44, 45 beim Schwenken um Schwenkachsen S aus der Warteposition in die Zentrierposition zu beiden Seiten des Transportpfads in den Geflügelkörper 13 oder Teile davon nahe dem Brustbein 11 jeweils zwischen Innenfilet 14a und Außenfilet 14b eintauchen und dabei das Brustbein 11 vor dem Eintritt zwischen die Trennmesser 21, 22 zentrieren. Dabei erfolgt das Schwenken der Zentrierelemente 33, 34 aus der Warteposition in die Zentrierposition mit einer resultierenden Hauptbewegungskomponente gegen die Transportrichtung T und das Bewegen aus der Zentrierposition in die Warteposition erfolgt mit einer resultierenden Hauptbewegungskomponente in Transportrichtung T.

Das Schwenken um die Schwenkachse S kann eine fließende Bewegung sein. Vorzugsweise treffen die in Transportrichtung T transportierten Geflügelkörper 13 oder Teile davon auf bereits aus der Warteposition in die Zentrierposition bewegte und dann stehende Zentrierelemente 33, 34. In Abstimmung mit der Transportgeschwindigkeit der Geflügelkörper 13 oder Teilen davon und/oder der ermittelten Größe der zu bearbeitenden Geflügelkörper 13 oder Teilen davon und/oder anderen Randbedingungen erfolgt das Schwenken vorzugsweise über eine Steuerungs- und/oder Regelungseinrichtung. Idealerweise werden die Zentrierelemente 33, 34 also schon in die Zentrierposition geschwenkt, bevor die Geflügelkörper 13 oder Teile davon, die Position der Zentrierelemente 33, 34 erreichen, so dass die Zentrierelemente 33, 34 quasi linear, geradlinig entlang des Brustbeins 11 in die Geflügelkörper 13 oder Teile davon eintauchen. Beim Schwenken aus der Zentrierposition in die Warteposition zurück werden die Zentrierelemente 33, 34 in Transportrichtung T mindestens temporär auf eine Geschwindigkeit beschleunigt, die höher als die Transportgeschwindigkeit des Transportförderers 18 ist. Die Zentrierelemente 33, 34 werden also in Transportrichtung T schneller bewegt, als der Geflügelkörper 13 oder Teile davon, so dass die Zentrierelemente 33, 34 aus dem Geflügelkörper 13 oder Teilen davon heraus und zurück in die Warteposition bewegt werden, ohne die Brustfilets 14 zu verletzen oder einzureißen.

Besonders bevorzugt wird das Verfahren mit einer Vorrichtung 10 nach einem oder mehreren der Ansprüche 1 bis 14 ausgeführt, wie sie zuvor in unterschiedlichen Ausführungsformen beschrieben wurde.

## Patentansprüche

1. Vorrichtung (10), ausgebildet und eingerichtet zum Schneiden in mindestens im Bereich eines Brustbeins (11) einer Karkasse (12) von Geflügelkörpern (13) oder Teilen davon miteinander verbundenen Brustfilets (14) entlang des Brustbeins (11), umfassend eine Transportvorrichtung (15) mit einem umlaufend antreibbaren Transportförderer (18) zum Transportieren der zu bearbeitenden Geflügelkörper (13) oder Teilen davon Hals (29) voraus entlang eines eine Transportebene E definierenden Transportpfads in Transportrichtung T, mindestens eine am Transportförderer (18) angeordnete Haltevorrichtung (19) zum Aufnehmen und Halten der Geflügelkörper (13) oder Teilen davon während des Transports entlang des Transportpfads in der Transportebene E, eine entlang des Transportpfads im Bereich des Transportförderers (18) angeordnete Messeranordnung (20) mit einem Paar Trennmesser (21, 22) zum Schneiden der Brustfilets (14) entlang des Brustbeins (11), wobei zu beiden Seiten der Mittelachse K des Transportpfads jeweils ein Trennmesser (21, 22) angeordnet ist, derart, dass zwischen den beiden Trennmessern (21, 22) ein Spalt A zum Transport der zu bearbeitenden Geflügelkörper (13) oder Teilen davon mit dem Brustbein (11) durch die einander gegenüberliegenden Trennmesser (21, 22) gebildet ist, wobei der Messeranordnung (20) ein Zentriermittel (32) zugeordnet ist, das zum Vorzentrieren des Brustbeins (11) der Karkasse (12) ausgebildet und eingerichtet ist und das zwei Zentrierelemente (33, 34) umfasst, die jeweils aus einer Warteposition, in der die Zentrierelemente (33, 34) außerhalb des Transportpfads positioniert sind, in eine Zentrierposition, in der die Zentrierelemente (33, 34) auf dem Transportpfad positioniert sind, und zurück bewegbar sind, wobei die Zentrierelemente (33, 34) in ihrer Zentrierposition in Transportrichtung T der Geflügelkörper (13) oder Teilen davon mindestens teilweise vor den beiden Trennmessern (21, 22) liegen, **dadurch gekennzeichnet, dass** die Zentrierelemente (33, 34) in Zentrierposition derart zueinanderstehen und so positioniert sind, dass die Zentrierelemente (33, 34) ausgehend von ihren freien Enden (44, 45) mit ihren einander zugekehrten Innenseiten in Transportrichtung T aufeinander zu bis zu einem Minimalabstand B größer Null verlaufen, um das Brustbein (11) bzw. einen Brustbeinkammfortsatz (27) des Brustbeins (11) "einzufangen", wobei der Minimalabstand B zwischen den in der Zentrierposition befindlichen Zentrierelementen (33, 34) kleiner ist als der Spalt A zwischen den Trennmessern (21, 22), um das Brustbein (11) mittig zwischen die Trennmesser (21, 22) zu führen.

2. Vorrichtung (10) nach Anspruch 1, **dadurch gekennzeichnet, dass** der Transportförderer (18) ein Obertrum (16) und ein Untertrum (17) aufweist, wobei die Messeranordnung (20) im Bereich des Untertrums (17) angeordnet ist.

3. Vorrichtung (10) nach Anspruch 1 oder 2, **dadurch gekennzeichnet** die Messeranordnung (20) mit dem Zentriermittel (32) an einer bezogen auf den Transportpfad auf und ab bewegbaren Messerschwinge (35) angeordnet ist.

4. Vorrichtung (10) nach einem oder mehreren der Ansprüche 1 bis 3, **dadurch gekennzeichnet, dass** jedem Zentrierelement (33, 34) ein Pneumatikzylinder (40, 41) zugeordnet ist, der zum Ausführen einer Schwenkbewegung der Zentrierelemente (33, 34) um eine Schwenkachse S ausgebildet und eingerichtet ist.

5. Vorrichtung (10) nach Anspruch 4, **dadurch gekennzeichnet, dass** die Schwenkachsen S der Zentrierelemente (33, 34) senkrecht zu der vom Transportpfad aufgespannten Transportebene E ausgerichtet sind.

6. Vorrichtung (10) nach einem oder mehreren der Ansprüche 1 bis 5, **dadurch gekennzeichnet, dass** die Zentrierelemente (33, 34) schnittkantenfreie Zentrierfinger (42, 43) sind, wobei freie Enden (44, 45) der Zentrierfinger (42, 43) zum Eintauchen in den Geflügelkörper (13) oder Teile davon nahe dem Brustbein (11) entgegen der Transportrichtung T jeweils zwischen Innenfilet (14a) und Außenfilet (14b) des Brustfilets (14) ausgebildet und geformt sind.

7. Vorrichtung (10) nach einem oder mehreren der Ansprüche 3 bis 6, **dadurch gekennzeichnet, dass** die Zentrierelemente (33, 34) mindestens in ihrer Zentrierposition mittels eines Federelementes (48, 49) gegen eine Federkraft ausweichbar ausgebildet und an der Messerschwinge (35) gelagert sind.

8. Vorrichtung (10) nach Anspruch 7, **dadurch gekennzeichnet, dass** die Zentrierelemente (33, 34) mittels des Federelementes (48, 49) um eine Schwenkachse F schwenkbar sind, wobei die Schwenkachsen F in der Zentrierposition im Wesentlichen parallel zur Transportrichtung T ausgerichtet sind.

9. Vorrichtung (10) nach einem oder mehreren der Ansprüche 4 bis 8, **dadurch gekennzeichnet, dass** die Pneumatikzylinder (40, 41) zur Steuerung der Schwenkbewegung der Zentrierelemente (33, 34) um die Schwenkachse S mit einer Steuerungs- und/oder Regelungseinrichtung verbunden sind.

10. Vorrichtung (10) nach einem oder mehreren der Ansprüche 5 bis 9, **dadurch gekennzeichnet, dass** die Zentrierelemente (33, 34) beim Schwenken um die Schwenkachse S aus der Warteposition in die Zentrierposition eine Hauptbewegungskomponente entgegen der Transportrichtung T und beim Schwenken aus der Zentrierposition in die Warteposition eine Hauptbewegungskomponente in Transportrichtung T aufweisen.

11. Vorrichtung (10) nach einem oder mehreren der Ansprüche 1 bis 10, **dadurch gekennzeichnet, dass** die Größe des Spaltes A zwischen den Trennmessern (21, 22) fest aber einstellbar ausgebildet ist und vorzugsweise zwischen 6 und 8 Millimeter beträgt, und dass die Größe des Minimalabstandes B zwischen den Zentrierelementen (33, 34) in der Zentrierposition fest aber einstellbar ist und vorzugsweise 5 Millimeter beträgt.

12. Vorrichtung (10) nach einem oder mehreren der Ansprüche 1 bis 11, **dadurch gekennzeichnet, dass** die Trennmesser (21, 22) rotierend antreibbare Kreismesser sind, die beabstandet zueinander einen zur Aufnahme des Brustbeins (11) dienenden Spalt A bildend angeordnet sind.

13. Vorrichtung (10) nach Anspruch 12, **dadurch gekennzeichnet, dass** die Kreismesser entgegen der Transportrichtung T der Geflügelkörper (13) oder Teilen davon angetrieben sind.

14. Vorrichtung (10) nach einem oder mehreren der Ansprüche 1 bis 13, **dadurch gekennzeichnet, dass** sie zum Schneiden von Brustfilets (14) an Brustkappen (23) als Teil eines Geflügelkörpers (13) ausgebildet und eingerichtet ist.

15. Verfahren zum Schneiden in mindestens im Bereich eines Brustbeins (11) einer Karkasse (12) von Geflügelkörpern (13) oder Teilen davon miteinander verbundenen Brustfilets (14) entlang des Brustbeins (11), umfassend die Schritte:
- Transportieren der zu bearbeitenden Geflügelkörper (13) oder Teilen davon Hals (29) voraus entlang eines eine Transportebene E definierenden Transportpfads in Transportrichtung T, wobei die Geflügelkörper (13) oder Teile davon mittels eines umlaufend angetriebenen Transportförderers (18) entlang des Transportpfads zu und durch mindestens eine Messeranordnung (20) transportiert werden,
- Einfädeln des Brustbeins (11) der Karkasse (12) zwischen ein Paar Trennmesser (21, 22) der Messeranordnung (20), und
- Schneiden der Brustfilets (14) zu beiden Seiten des Brustbeins (11) entlang des Brustbeins (11) mittels der Trennmesser (21, 22),
- wobei das Brustbein (11) vor dem Eingriff der Trennmesser (21, 22) in die Brustfilets (14) mittels eines Zentriermittels (32) vorzentriert wird, indem Zentrierelemente (33, 34) des Zentriermittels (32) von beiden Seiten des Transportpfads aus einer Warteposition außerhalb des Transportpfads in eine Zentrierposition auf dem Transportpfad bewegt werden, und dass die Zentrierelemente (33, 34) zurück in die Warteposition bewegt werden, sobald sich ein Brustbeinkammfortsatz (27) des Brustbeins (11) der Karkasse (12) zwischen den Trennmessern (21, 22) befindet,
**dadurch gekennzeichnet, dass** das Brustbein (11) bzw. ein Brustbeinkammfortsatz (27) des Brustbeins (11) "eingefangen" wird, indem die Zentrierelemente (33, 34) in Zentrierposition derart zueinanderstehen und so positioniert sind, dass die Zentrierelemente (33, 34) ausgehend von ihren freien Enden (44, 45) mit ihren einander zugekehrten Innenseiten in Transportrichtung T aufeinander zu bis zu einem Minimalabstand B größer Null verlaufen, wobei das Brustbein (11) mittig zwischen die Trennmesser (21, 22) geführt wird, indem der Minimalabstand B zwischen den in der Zentrierposition befindlichen Zentrierelementen (33, 34) kleiner ist als der Spalt A zwischen den Trennmessern (21, 22).

16. Verfahren nach Anspruch 15, **dadurch gekennzeichnet, dass** Zentrierfinger (42, 43) als Zentrierelemente (33, 34) mit ihren freien Enden (44, 45) beim Schwenken um Schwenkachsen S aus der Warteposition in die Zentrierposition zu beiden Seiten des Transportpfads in den Geflügelkörper (13) oder Teile davon nahe dem Brustbein (11) jeweils zwischen Innenfilet (14a) und Außenfilet (14b) eintauchen und dabei das Brustbein (11) vor dem Eintritt zwischen die Trennmesser (21, 22) zentrieren.

17. Verfahren nach Anspruch 15 oder 16, **dadurch gekennzeichnet, dass** das Bewegen der Zentrierelemente (33, 34) aus der Warteposition in die Zentrierposition mit einer resultierenden Hauptbewegungskomponente gegen die Transportrichtung T erfolgt und das Bewegen aus der Zentrierposition in die Warteposition mit einer resultierenden Hauptbewegungskomponente in Transportrichtung erfolgt.

18. Verfahren nach einem oder mehreren der Ansprüche 15 bis 17, **dadurch gekennzeichnet, dass** die in Transportrichtung T transportierten Geflügelkörper (13) oder Teile davon auf bereits aus der Warteposition in die Zentrierposition bewegte und dann stehende Zentrierelemente (33, 34) treffen.

19. Verfahren nach einem oder mehreren der Ansprüche 15 bis 18, **dadurch gekennzeichnet, dass** die Zentrierelemente (33, 34) mindestens beim Bewegen aus der Zentrierposition in die Warteposition mindestens temporär auf eine Geschwindigkeit beschleunigt werden, die höher als die Transportgeschwindigkeit des Transportförderers (18) ist.

20. Verfahren nach einem oder mehreren der Ansprüche 15 bis 19, **dadurch gekennzeichnet, dass** es mit einer Vorrichtung (10) nach einem oder mehreren der Ansprüche 1 bis 14 ausgeführt wird.

## Claims

1. Apparatus (10), configured and adapted for cutting into breast fillets (14) that are connected to one another at least in the region of a breastbone (11) of a carcass (12) of poultry bodies (13) or parts thereof, the breast fillets being cut into along the breastbone (11), comprising a transport apparatus (15) having a revolvingly driveable transport conveyor (18) for transporting, neck (29) first, the poultry bodies (13) or parts thereof to be processed in a transport direction T along a transport path defining a transport plane E, at least one holding apparatus (19), arranged on the transport conveyor (18), for receiving and holding the poultry bodies (13) or parts thereof during transport along the transport path in the transport plane E, a knife assembly (20), arranged along the transport path in the region of the transport conveyor (18), having a pair of separating knives (21, 22) for cutting the breast fillets (14) along the breastbone (11), wherein one separating knife (21, 22), each, is arranged on either side of the centre axis K of the transport path such that there is formed between the two separating knives (21, 22) a gap A for transport of the poultry bodies (13) or parts thereof to be processed with the breastbone (11) through the mutually opposite separating knives (21, 22), wherein there is associated with the knife assembly (20) a centring means (32) which is configured and adapted for pre-centring the breastbone (11) of the carcass (12) and which comprises two centring elements (33, 34) which are each movable out of a stand-by position, in which the centring elements (33, 34) are positioned outside the transport path, into a centring position, in which the centring elements (33, 34) are positioned on the transport path, and back, wherein the centring elements (33, 34) in their centring position are located at least partly in front of the two separating knives (21, 22) in the transport direction T of the poultry bodies (13) or parts thereof, **characterised in that** the centring elements (33, 34) in the centring position are so situated relative to one another and are so positioned that the centring elements (33, 34), starting from their free ends (44, 45), run towards one another with their mutually facing inner sides in the transport direction T to a minimum distance B greater than zero, in order to "catch" the breastbone (11) or a breastbone crest process (27) of the breastbone (11), wherein the minimum distance B between the centring elements (33, 34) in the centring position is smaller than the gap A between the separating knives (21, 22), in order to guide the breastbone (11) centrally between the separating knives (21, 22).

2. Apparatus (10) according to claim 1, **characterised in that** the transport conveyor (18) has an upper run (16) and a lower run (17), wherein the knife assembly (20) is arranged in the region of the lower run (17).

3. Apparatus (10) according to claim 1 or 2, **characterised in that** the knife assembly (20) with the centring means (32) is arranged on a knife rocker element (35) which is movable up and down relative to the transport path.

4. Apparatus (10) according to one or more of claims 1 to 3, **characterised in that** there is associated with each centring element (33, 34) a pneumatic cylinder (40, 41) which is configured and adapted for carrying out a pivoting movement of the centring elements (33, 34) about a pivot axis S.

5. Apparatus (10) according to claim 4, **characterised in that** the pivot axes S of the centring elements (33, 34) are oriented perpendicularly to the transport plane E spanned by the transport path.

6. Apparatus (10) according to one or more of claims 1 to 5, **characterised in that** the centring elements (33, 34) are centring fingers (42, 43) without cutting edges, wherein free ends (44, 45) of the centring fingers (42, 43) are configured and shaped to plunge into the poultry body (13) or parts thereof close to the breastbone (11) contrary to the transport direction T in each case between the inner fillet (14a) and the outer fillet (14b) of the breast fillet (14).

7. Apparatus (10) according to one or more of claims 3 to 6, **characterised in that** the centring elements (33, 34), at least in their centring position, are configured and mounted on the knife rocker element (35) so as to be deflectable by means of a spring element (48, 49) against a spring force.

8. Apparatus (10) according to claim 7, **characterised in that** the centring elements (33, 34) are pivotable by means of the spring element (48, 49) about a pivot axis F, wherein the pivot axes F, in the centring position, are oriented substantially parallel to the transport direction T.

9. Apparatus (10) according to one or more of claims 4 to 8, **characterised in that** the pneumatic cylinders (40, 41) are connected to a control and/or regulating device for control of the pivoting movement of the centring elements (33, 34) about the pivot axis S.

10. Apparatus (10) according to one or more of claims 5 to 9, **characterised in that** the centring elements (33, 34), on pivoting about the pivot axis S out of the stand-by position into the centring position, have a main movement component contrary to the transport direction T and, on pivoting out of the centring position into the stand-by position, have a main movement component in the transport direction T.

11. Apparatus (10) according to one or more of claims 1 to 10, **characterised in that** the size of the gap A between the separating knives (21, 22) is configured to be fixed but adjustable and is preferably between 6 and 8 millimetres, and **in that** the size of the minimum distance B between the centring elements (33, 34) in the centring position is fixed but adjustable and is preferably 5 millimetres.

12. Apparatus (10) according to one or more of claims 1 to 11, **characterised in that** the separating knives (21, 22) are rotatingly driven circular knives which are arranged spaced apart from one another to form a gap A which serves to receive the breastbone (11).

13. Apparatus (10) according to claim 12, **characterised in that** the circular knives are driven contrary to the transport direction T of the poultry bodies (13) or parts thereof.

14. Apparatus (10) according to one or more of claims 1 to 13, **characterised in that** it is configured and adapted for cutting breast fillets (14) on breast caps (23) as part of a poultry body (13).

15. Method for cutting into breast fillets (14) that are connected to one another at least in the region of a breastbone (11) of a carcass (12) of poultry bodies (13) or parts thereof, the breast fillets being cut into along the breastbone (11), comprising the steps:
- transporting, neck (29) first, the poultry bodies (13) or parts thereof to be processed in a transport direction T along a transport path defining a transport plane E, wherein the poultry bodies (13) or parts thereof are transported by means of a revolvingly driven transport conveyor (18) along the transport path to and through at least one knife assembly (20),
- threading the breastbone (11) of the carcass (12) between a pair of separating knives (21, 22) of the knife assembly (20), and
- cutting the breast fillets (14) on either side of the breastbone (11) along the breastbone (11) by means of the separating knives (21, 22),
**where in** the breastbone (11), before the separating knives (21, 22) engage into the breast fillets (14), is pre-centred by means of a centring means (32) in that centring elements (33, 34) of the centring means (32) are moved from both sides of the transport path out of a stand-by position outside the transport path into a centring position on the transport path, and in that the centring elements (33, 34) are moved back into the stand-by position as soon as a breastbone crest process (27) of the breastbone (11) of the carcass (12) is situated between the separating knives (21, 22),
**characterised in that** the centring elements (33, 34) in the centring position are so situated relative to one another and are so positioned that the centring elements (33, 34), starting from their free ends (44, 45), run towards one another with their mutually facing inner sides in the transport direction T to a minimum distance B greater than zero, in order to "catch" the breastbone (11) or a breastbone crest process (27) of the breastbone (11), wherein the minimum distance B between the centring elements (33, 34) in the centring position is smaller than the gap A between the separating knives (21, 22), in order to guide the breastbone (11) centrally between the separating knives (21, 22).

16. Method according to claim 15, **characterised in that** centring fingers (42, 43) as the centring elements (33, 34) plunge in with their free ends (44, 45), on pivoting about pivot axes S out of the stand-by position into the centring position, on either side of the transport path into the poultry body (13) or parts thereof close to the breastbone (11) in each case between the inner fillet (14a) and the outer fillet (14b) and thereby centre the breastbone (11) before it enters between the separating knives (21, 22).

17. Method according to claim 15 or 16, **characterised in that** the movement of the centring elements (33, 34) out of the stand-by position into the centring position takes place with a resulting main movement component contrary to the transport direction T, and the movement out of the centring position into the stand-by position takes place with a resulting main movement component in the transport direction.

18. Method according to one or more of claims 15 to 17, **characterised in that** the poultry bodies (13) or parts thereof transported in the transport direction T meet centring elements (33, 34) which have already been moved out of the stand-by position into the centring position and are then stationary.

19. Method according to one or more of claims 15 to 18, **characterised in that** the centring elements (33, 34), at least on moving out of the centring position into the stand-by position, are accelerated at least temporarily to a speed that is greater than the transport speed of the transport conveyor (18).

20. Method according to one or more of claims 15 to 19, **characterised in that** it is carried out with an apparatus (10) according to one or more of claims 1 to 15.

## Revendications

1. Dispositif (10) configuré et adapté pour découper, au moins dans la zone d'un sternum (11) d'une carcasse (12) de volaille (13) ou de parties de celles-ci, des filets de poitrine (14) reliés entre eux le long du sternum (11), comprenant un dispositif de transport (15) avec un convoyeur de transport (18) pouvant être entraîné de manière circulaire pour transporter les carcasses de volaille (13) à traiter ou des parties de celles-ci, le cou (29) en avant, le long d'un trajet de transport définissant un plan de transport E dans la direction de transport T, au moins un dispositif de maintien (19) agencé sur le convoyeur de transport (18) pour recevoir et maintenir les volailles (13) ou des parties de celles-ci pendant le transport le long du trajet de transport dans le plan de transport E, un agencement de lames (20) agencé le long du trajet de transport dans la zone du convoyeur de transport (18), avec une paire de lames de séparation (21, 22) pour découper les filets de poitrine (14) le long du sternum (11), une lame de séparation (21, 22) étant agencée respectivement des deux côtés de l'axe central K du trajet de transport, de telle sorte qu'entre les deux lames de séparation (21, 22) se forme une fente A pour le transport des volailles (13) à traiter ou de parties de celles-ci avec le sternum (11) à travers les lames de séparation (21, 22) opposées l'une à l'autre, un moyen de centrage (32) étant associé à l'agencement de lames (20), lequel est configuré et adapté pour précentrer le sternum (11) de la carcasse (12) et comprend deux éléments de centrage (33, 34) qui peuvent être déplacés chacun depuis une position d'attente, dans laquelle les éléments de centrage (33, 34) sont positionnés à l'extérieur du trajet de transport, dans une position de centrage dans laquelle les éléments de centrage (33, 34) sont positionnés sur le trajet de transport, et en retour, les éléments de centrage (33, 34) se situant dans leur position de centrage, dans la direction de transport T des volailles (13) ou de parties de celles-ci, au moins partiellement avant les deux lames de séparation (21, 22), **caractérisé en ce que** les éléments de centrage (33, 34) en position de centrage sont placés les uns par rapport aux autres et positionnés de telle sorte que les éléments de centrage (33, 34), à partir de leurs extrémités libres (44, 45), se rapprochent avec leurs côtés intérieurs tournés l'un vers l'autre dans la direction de transport T jusqu'à une distance minimale B supérieure à zéro, afin de « capturer » le sternum (11) ou un prolongement en crête (27) du sternum (11), la distance minimale B entre les éléments de centrage (33, 34) se trouvant dans la position de centrage étant inférieure à la fente A entre les lames de séparation (21, 22), afin de guider le sternum (11) au centre entre les lames de séparation (21, 22).

2. Dispositif (10) selon la revendication 1, **caractérisé en ce que** le convoyeur de transport (18) présente un brin supérieur (16) et un brin inférieur (17), l'agencement de lames (20) étant agencé dans la zone du brin inférieur (17).

3. Dispositif (10) selon la revendication 1 ou 2, **caractérisé en ce que** l'agencement de lames (20) avec le moyen de centrage (32) est agencé sur un bras oscillant à lames (35) pouvant être déplacé vers le haut et vers le bas par rapport au trajet de transport.

4. Dispositif (10) selon une ou plusieurs des revendications 1 à 3, **caractérisé en ce qu'**à chaque élément de centrage (33, 34) est associé un vérin pneumatique (40, 41) qui est configuré et adapté pour effectuer un mouvement de pivotement des éléments de centrage (33, 34) autour d'un axe de pivotement S.

5. Dispositif (10) selon la revendication 4, **caractérisé en ce que** les axes de pivotement S des éléments de centrage (33, 34) sont orientés perpendiculairement au plan de transport E défini par le trajet de transport.

6. Dispositif (10) selon une ou plusieurs des revendications 1 à 5, **caractérisé en ce que** les éléments de centrage (33, 34) sont des doigts de centrage (42, 43) sans arêtes coupantes, les extrémités libres (44, 45) des doigts de centrage (42, 43) étant configurées et formées pour s'enfoncer dans la volaille (13) ou des parties de celle-ci à proximité du sternum (11) à l'encontre de la direction de transport T, entre le filet intérieur (14a) et le filet extérieur (14b) du filet de poitrine (14).

7. Dispositif (10) selon une ou plusieurs des revendications 3 à 6, **caractérisé en ce que** les éléments de centrage (33, 34) sont configurés de manière à pouvoir s'écarter au moins dans leur position de centrage au moyen d'un élément à ressort (48, 49) contre une force de ressort et sont montés sur le bras oscillant à lames (35).

8. Dispositif (10) selon la revendication 7, **caractérisé en ce que** les éléments de centrage (33, 34) peuvent pivoter autour d'un axe de pivotement F au moyen de l'élément à ressort (48, 49), les axes de pivotement F étant orientés essentiellement parallèlement à la direction de transport T dans la position de centrage.

9. Dispositif (10) selon une ou plusieurs des revendications 4 à 8, **caractérisé en ce que** les vérins pneumatiques (40, 41) pour commander le mouvement de pivotement des éléments de centrage (33, 34) autour de l'axe de pivotement S sont reliés à un appareil de commande et/ou de régulation.

10. Dispositif (10) selon une ou plusieurs des revendications 5 à 9, **caractérisé en ce que** les éléments de centrage (33, 34), lors du pivotement autour de l'axe de pivotement S de la position d'attente à la position de centrage, présentent une composante de mouvement principale à l'encontre de la direction de transport T et, lors du pivotement de la position de centrage à la position d'attente, une composante de mouvement principale dans la direction de transport T.

11. Dispositif (10) selon une ou plusieurs des revendications 1 à 10, **caractérisé en ce que** la taille de la fente A entre les lames de séparation (21, 22) est configurée fixe mais réglable et est de préférence comprise entre 6 et 8 millimètres, et **en ce que** la taille de la distance minimale B entre les éléments de centrage (33, 34) dans la position de centrage est fixe mais réglable et est de préférence de 5 millimètres.

12. Dispositif (10) selon une ou plusieurs des revendications 1 à 11, **caractérisé en ce que** les lames de séparation (21, 22) sont des lames circulaires pouvant être entraînées en rotation, qui sont agencées à distance les unes des autres en formant une fente A servant à recevoir le sternum (11).

13. Dispositif (10) selon la revendication 12, **caractérisé en ce que** les lames circulaires sont entraînées à l'encontre de la direction de transport T des volailles (13) ou de parties de celles-ci.

14. Dispositif (10) selon une ou plusieurs des revendications 1 à 13, **caractérisé en ce qu'**il est configuré et adapté pour découper des filets de poitrine (14) sur des coiffes de poitrine (23) faisant partie d'une volaille (13).

15. Procédé pour découper, au moins dans la zone d'un sternum (11) d'une carcasse (12) de volaille (13) ou de parties de celle-ci, des filets de poitrine (14) reliés entre eux le long du sternum (11), comprenant les étapes :
- le transport des volailles (13) à traiter ou de parties de celles-ci, le cou (29) en avant, le long d'un trajet de transport définissant un plan de transport E dans la direction de transport T, les volailles (13) ou les parties de celles-ci étant transportées au moyen d'un convoyeur de transport (18) entraîné de manière circulaire le long du trajet de transport vers et à travers au moins un agencement de lames (20),
- l'enfilement du sternum (11) de la carcasse (12) entre une paire de lames de séparation (21, 22) de l'agencement de lames (20), et
- la découpe des filets de poitrine (14) des deux côtés du sternum (11) le long du sternum (11) au moyen des lames de séparation (21, 22),
- le sternum (11) étant précentré au moyen d'un moyen de centrage (32) avant l'engagement des lames de séparation (21, 22) dans les filets de poitrine (14), par le fait que des éléments de centrage (33, 34) du moyen de centrage (32) sont déplacés des deux côtés du trajet de transport depuis une position d'attente à l'extérieur du trajet de transport vers une position de centrage sur le trajet de transport, et en ce que les éléments de centrage (33, 34) sont déplacés en retour dans la position d'attente dès qu'un prolongement en crête (27) du sternum (11) de la carcasse (12) se trouve entre les lames de séparation (21, 22),
**caractérisé en ce que** le sternum (11) ou un prolongement en crête (27) du sternum (11) est « capturé » par le fait que les éléments de centrage (33, 34) en position de centrage sont placés les uns par rapport aux autres et positionnés de telle sorte que les éléments de centrage (33, 34), à partir de leurs extrémités libres (44, 45), se rapprochent avec leurs côtés intérieurs tournés l'un vers l'autre dans la direction de transport T jusqu'à une distance minimale B supérieure à zéro, le sternum (11) étant guidé au centre entre les lames de séparation (21, 22) par le fait que la distance minimale B entre les éléments de centrage (33, 34) se trouvant dans la position de centrage est inférieure à la fente A entre les lames de séparation (21, 22).

16. Procédé selon la revendication 15, **caractérisé en ce que** des doigts de centrage (42, 43) en tant qu'éléments de centrage (33, 34) pénètrent, lors du pivotement autour des axes de pivotement S depuis la position d'attente vers la position de centrage, avec leurs extrémités libres (44, 45) des deux côtés du trajet de transport dans la volaille (13) ou des parties de celle-ci à proximité du sternum (11), respectivement entre le filet intérieur (14a) et le filet extérieur (14b), et centrent le sternum (11) avant l'entrée entre les lames de séparation (21, 22).

17. Procédé selon la revendication 15 ou 16, **caractérisé en ce que** le déplacement des éléments de centrage (33, 34) de la position d'attente à la position de centrage s'effectue avec une composante de mouvement principale résultante à l'encontre de la direction de transport T et le déplacement de la position de centrage à la position d'attente s'effectue avec une composante de mouvement principale résultante dans la direction de transport.

18. Procédé selon une ou plusieurs des revendications 15 à 17, **caractérisé en ce que** les volailles (13) ou des parties de celles-ci transportées dans la direction de transport T rencontrent des éléments de centrage (33, 34) déjà déplacés de la position d'attente vers la position de centrage, puis à l'arrêt.

19. Procédé selon une ou plusieurs des revendications 15 à 18, **caractérisé en ce que** les éléments de centrage (33, 34) sont accélérés, au moins lors du déplacement de la position de centrage vers la position d'attente, au moins temporairement à une vitesse supérieure à la vitesse de transport du convoyeur de transport (18).

20. Procédé selon une ou plusieurs des revendications 15 à 19, **caractérisé en ce qu'**il est mis en œuvre avec un dispositif (10) selon une ou plusieurs des revendications 1 à 14.
